# EUROPÄISCHE PATENTSCHRIFT

(11) **EP 2 343 861 B1**
(45) Veröffentlichungstag und Bekanntmachung des Hinweises auf die Patenterteilung: **13.02.2013**
(21) Anmeldenummer: 06125629.3
(22) Anmeldetag: 07.12.2006
(51) Int. Cl.: H04L 27/26, H04L 27/36, H04L 27/34

(54) **Sendeverfahren für ein Mehrträgersignal und Kommunikationsendgerät dafür**
Method of transmitting a multi-carrier signal and corresponding communications device
Procédé de transmission d'un signal multiporteuse et dispositif de communication correspondant

(30) Priorität: 08.12.2005 DE 102005058707
(43) Veröffentlichungstag der Anmeldung: 13.07.2011
(73) Patentinhaber: Hewlett-Packard Development Company, L.P., Houston, TX 77707 (US)
(72) Erfinder: Civeira Munoz, Carlos, 42105, Wuppertal (DE)
(74) Vertreter: Samson & Partner

(56) Entgegenhaltungen:
- WO-A1-2004/019545
- WO-A2-02/071663
- JP-A- 2002 261 724

## Beschreibung

Die Erfindung bezieht sich auf ein Sendeverfahren für ein Mehrträgersignal, bei dem ein serieller digitaler Datenstrom in mehrere parallele digitale Datenströme umgewandelt wird, wobei jedem parallelen digitalen Datenstrom eine Unterträgerfrequenz zugeordnet wird, die parallelen digitalen Datenströme orthogonalisiert und zu einem digitalen Gesamtdatenstrom zusammengefasst werden, der digitale Gesamtdatenstrom im Zuge einer Digital-/Analogwandlung in einen analogen Gesamtdatenstrom umgesetzt wird, der analoge Gesamtdatenstrom auf eine Sendeträgerfrequenz gemischt, dann verstärkt und abschließend über eine Antenne ausgestrahlt wird sowie ein Kommunikationsendgerät zur Durchführung des Verfahrens.

Ein solches Sendeverfahren findet allgemein bei Mehrträgerverfahren Anwendung, die unter dem Oberbegriff "OFDM" (Orthogonal Frequency Division Multiplexing) zusammengefasst werden. Bei solchen Mehrträgerverfahren werden anstatt einen einzelnen Signalträger zu modulieren bis zu mehreren Tausend Unterträger gleichzeitig moduliert. Jeder einzelne Unterträger kann phasen- und beispielsweise ab vier Bit pro Symbol zusätzlich amplitudenmoduliert sein. Typische Bit-Anzahlen pro Symbol sind zwei bis sechs.

Als Beispiele für Mehrträgersendeverfahren sind zu nennen: Digital Audio Braodcasting (DAB) mit 192 bis 1536 Unterträgern, Digital Radio Mondial (DRM) mit 80 bis 460 Unterträgern, DVB-T mit 2048 und 6144 Unterträgern, 54 Mbps-WLAN nach IEEE 802.11 g mit 52 Unterträgern und nach IEEE 802.11 a sowie ADSL mit 32 Unterträgern für den Uplink und 190 Unterträgern für den Downlink.

Mehrträgerverfahren benötigen aufgrund des vergleichsweise hohen CREST-Faktors, d. h. dem Verhältnis zwischen maximaler und mittlerer Signalleistung, einen besonders linearen Leistungsverstärker für die Endstufe. Die hohe Linearität dieses Leistungsverstärkers muss durch geeignet hohen Stromverbrauch sichergestellt werden, so dass der Leistungsverstärker sehr ineffizient arbeitet. Diese Wirkung vermindert die Sprechzeit für beispielsweise VoIP-WLAN-Schnurlosendgeräten erheblich.

Eine effiziente Vorgehensweise zum Linearisieren des Leistungsverstärkers bzw. des OFDM-Senders insgesamt kann eine polare Modulation sein, die auf dem bekannten Prinzip der EER (Envelope Elimination and Restauration) basiert. Dabei wird zunächst von einem auszusendenden Signal die durch eine Signalamplitude gegebene "Hüllkurve" vom winkelmodulierten Signal entfernt und dann wieder hinzugefügt. Bei einer Verwendung der polaren Komponenten des durch den zur Darstellung von Signalen bekannten Zeiger in der In-Phase/Quadratur-Ebene repräsentierten Signals lassen sich das winkelmodulierte Signal und das amplitudenmodulierte Signal getrennt erzeugen und verstärken und dann schließlich am Sendeverstärker zusammenfügen. Beispielsweise wird das winkelmodulierte Signal auf einen Signaleingang des Leistungsverstärkers gegeben, während das amplitudenmodulierte Signal zur Steuerung einer Versorgungsspannung desselben Leistungsverstärkers verwendet wird. Dieses Verfahren hat den Vorteil, dass am Signaleingang des Leistungsverstärkers das winkelmodulierte Signal mit konstanter Umhüllenden vorliegt und daher der Leistungsverstärker bezüglich dieser Eingangsleistung optimiert in Sättigung betrieben werden kann. Es ist auf diese Weise eine effizientere, lineare Verstärkung möglich, als wenn direkt das amplituden- und phasenmodulierte Signal auf den Signaleingang gegeben und in üblicher Weise verstärkt wird.

Ausgehend von diesen Überlegungen ist für ein Einträgersignal in der WO 01/65722 A2 ein Sendeverfahren beschrieben worden, das eine polare Modulation des Leistungsverstärkers gestattet. Bei diesem Verfahren werden zusätzliche Signalimpulse addiert, um die für eine polare Modulation problematische Verhaltensweise zu unterdrücken, dass Signale sich nahe am Koordinatenursprung des In-Phase-, Quadratur-Diagramms befinden. Die Problematik rührt daher, dass bei einer direkten Übernahme der Polarkoordinaten zur Erzeugung des winkel- und amplitudenmodulierten Signals tritt dann auf, wenn aufgrund der zu übermittelnden Informationen das Sendesignal gemäß dem Bildungsgesetz so auszusehen hat, dass der Sendekurvenzug in der komplexen I/Q-Ebene nahe am Ursprung vorbeiführt. Bei einer konstanten Bahngeschwindigkeit steigt dann die Winkelgeschwindigkeit, d. h. die Geschwindigkeit, mit der sich der Zeiger innerhalb der komplexen I/Q-Ebene dreht, betragsmäßig erheblich an, was das Spektrum des momentanen Frequenzsignals (=Winkelgeschwindigkeit) stark verbreitert. Zudem wird der Zeiger selbst zu diesem Punkt sehr kurz, d. h. die Amplitude wird sehr klein, was sich in der Hüllkurve des Sendesignals durch einen spitzen Einbruch bemerkbar macht. Hierdurch wird das Spektrum des Amplitudensignals ebenfalls in unerwünschter Weise verbreitert. Ein Extremfall liegt dann vor, wenn der Sendekurvenzug direkt auf den Ursprung verlaufen sollte. In diesem Fall fällt das Amplitudensignal bis auf die Zahl Null ab, was dazu führt, dass die Amplitudenmodulation, welche durch das Verhältnis der maximalen Amplitude zur minimalen Amplitude definiert ist, ins unendliche steigt. Bezüglich des Winkels kommt es dabei zu einem Phasensprung. Ein solcher Phasensprung ist insbesondere ungünstig, wenn der Winkel des Zeigers unmittelbar dazu verwendet wird, um beispielsweise mittels einer Phasenregelschleife das winkelmodulierte Signal zu erzeugen. Ein Phasensprung könnte hier zu einem vorübergehenden Ausrasten der Phasenregelschleife (PLL) führen.

Die vorstehend erläuterte Lösung für ein Einträgersignal liefert keine Lösung für den Fall eines Mehrträgersignals, da dort eine Mehrzahl von Unterträgerfrequenzen einander überlagert wird.

JP 2002 261 724 A und WO 2004/019545 A1 offenbaren Sendeverfahren des eingemäß genannten Art.

Ausgehend hiervon liegt der Erfindung die Aufgabe zugrunde, ein Sendeverfahren sowie ein Kommunikationsendgerät für ein Mehrträgersignal anzugeben, bei denen für eine direkte Umsetzung von Amplituden- und Winkelinformationen eines Basisbandsignals in ein amplituden-und winkelmoduliertes Sendesignal des Aufwand reduziert ist.

Diese Aufgabe wird durch ein Sendeverfahren nach Anspruch 1 und durch ein Kommunikationsendgerät nach Patentanspruch 8 gelöst.

Danach ist ein Sendeverfahren für ein Mehrträgersignal vorgesehen, bei dem ein serieller digitaler Datenstrom in mehrere parallele digitale Datenströme umgewandelt wird, wobei jedem parallelen digitalen Datenstrom eine Unterträgerfrequenz zugeordnet wird, die parallelen digitalen Datenströme orthogonalisiert und zu einem digitalen Gesamtdatenstrom zusammengefasst werden, der digitale Gesamtdatenstrom im Zuge einer Digital-/Analogwandlung in einen analogen Gesamtdatenstrom umgesetzt wird, der analoge Gesamtdatenstrom auf eine Sendeträgerfrequenz gemischt, dann verstärkt und abschließend über eine Antenne ausgestrahlt wird, wobei der digitale Gesamtdatenstrom auf Datenbereiche untersucht wird, die sich innerhalb eines vorgegebenen Abstands von einem Ursprung in einem In-Phase/Quadratur-Diagramm befinden, und wenigstens eine Unterträgerfrequenz in ihrer Amplitude derart verändert wird, dass der Abstand aufgefundener Datenbereiche von dem Ursprung zunimmt.

Durch die Modifizierung wenigstens einer Amplitude der Unterträgerfrequenzen kann die Einhaltung eines vorgegebenen Minimalabstandes von dem Ursprung des I/Q-Diagramms eingehalten werden. Bei Bedarf können selbstverständlich auch mehrere Unterträgerfrequenzsignale in ihrer Amplitude angepasst werden.

Dabei findet zunächst keine Unterscheidung zwischen Nutzdaten und anderen Daten statt. Beispielsweise in dem Fall einer 54 Mbps-WLAN mit 52 Unterträgerfrequenzen sind 48 Unterträgerfrequenzen Nutzdaten und 4 Unterträgerfrequenzen Pilotdaten zugeordnet.

Eine Verbesserung einer Signalqualität durch Vermeidung von Annäherungen an den Ursprung kann grundsätzlich durch Verändern irgendeiner Amplitude der Unterträgerfrequenzsignale erreicht werden.

Es ist vorgesehen, dass die wenigstens eine, in ihrer Amplitude veränderte Unterträgerfrequenz eine Unterträgerfrequenz für Pilotsignale ist. Dies hat den Vorteil, dass durch die Amplitudenänderung keine Fehler in Nutzdaten eingebracht werden, die möglicherweise im Nachhinein schwierig zu kompensieren sind. Eine Einflussnahme auf die Amplitude der Unterträgerfrequenzsignale für Pilotsignale lässt die Nutzdaten unverfälscht.

Erfindungsgemäß werden die digitalen parallelen Datenströme für Pilotsignale und die digitalen Datenströme für Nutzsignale jeweils gesondert orthogonalisiert, so dass ein digitaler Gesamtnutzdatenstrom und ein digitaler Gesamtpilotdatenstrom erzeugt werden, die zu dem digitalen Gesamtdatenstrom zusammengefasst werden.

Dabei sind sämtliche digitalen parallelen Datenströme untereinander orthogonal, so dass sie sich gegenseitig nicht stören.

Die gesonderte Behandlung für die Datenströme für Pilotsignale ergibt sich beispielsweise für das Mehrträgerverfahren 54 Mbps-WLAN nach IEEE 812.11g. Dort kann vorgesehen sein, dass die insgesamt vier verwendeten Unterträgerfrequenzen für Pilotsignale gesondert orthogonalisiert werden, was beispielsweise mit Hilfe einer 64-IFFT (inverse schnelle Fourier-Transformation)vonstatten gehen kann. Bei einer solchen Weiterverarbeitung der Pilotsignale ist außerdem zu beachten, dass zwölf grundsätzlich zur Verfügung stehende Unterträgerfrequenzen in ihrer Amplitude auf Null gesetzt werden, da der genannte Standard mit 48 Unterträgerfrequenzen für Nutzsignale und vier Unterträgerfrequenzen für Pilotsignale arbeitet. Dieses Null-Setzen geschieht ebenfalls im Rahmen der Orthogonalisierung bzw. wird von einer Einrichtung durchgeführt, welche ebenfalls zur Orthogonalisierung der Unterträgerfrequenzsignale benutzt wird.

Ein Zusammenführen des digitalen Gesamtpilotdatenstroms und des digitalen Gesamtnutzdatenstroms zu dem digitalen Gesamtdatenstrom schafft die Voraussetzung dafür, den digitalen Gesamtdatenstrom auf Datenbereiche zu untersuchen, die sich innerhalb eines vorgegebenen Abstands zu dem o. g. Ursprung befinden.

Wenn nun beispielsweise mehrere solche Datenbereiche aufgefunden worden sind und Amplituden von Unterträgerfrequenzsignalen, bevorzugt solcher für Pilotsignale, geändert worden sind, um den Abstand vom Ursprung zu vergrößern, kann wie folgt weiter vorgegangen werden: nach Verändern der wenigstens einen Unterträgerfrequenz in ihrer Amplitude werden sämtliche digitalen parallelen Datenströme für Pilotsignale neu orthogonalisiert und zu einem adaptierten Gesamtpilotdatenstrom zusammengefasst. Dieser Gesamtpilotdatenstrom kann nun mit dem Gesamtnutzdatenstrom überlagert werden, wobei das sich dann ergebende Gesamtsignal wenigstens eine reduzierte Anzahl von Datenbereichen mit geringem Abstand zum Ursprung aufweisen wird.

Dabei ist es vorteilhaft, wenn der adaptierte Gesamtpilotdatenstrom mit dem gesamten Nutzdatenstrom überlagert wird, wobei der gesamte Nutzdatenstrom derart verzögert wird, dass der Gesamtnutzdatenstrom und der adaptierte Gesamtpilotdatenstrom zeitlich synchronisiert werden. Diese Vorgehensweise trägt der Tatsache Rechnung, dass das Auffinden der Datenbereiche mit geringem Abstand zum Ursprung im In-Phase/Quadratur-Diagramm Berechnungen erfordert, welche eine zeitliche Verzögerung nach sich ziehen. Auch die neue Orthogonalisierung der parallelen digitalen Pilotdatenströme benötigt einen Zeitraum zur Ausführung. Diese Verzögerungen sind zu berücksichtigen, wenn der Gesamtnutzdatenstrom und der adaptierte Gesamtpilotdatenstrom aufsummiert werden.

Der adaptierte Gesamtpilotdatenstrom ergibt zusammen mit dem Gesamtnutzdatenstrom einen adaptierten digitalen Gesamtdatenstrom.

Um nun aufgrund des adaptierten digitalen Gesamtdatenstroms einen polaren Leistungsverstärker geeignet ansteuern zu können, wird der adaptierte digitale Gesamtdatenstrom bevorzugt in einen Amplitudenmodulations-Datenstrom und einen Phasenmodulations-Datenstrom aufgeteilt, die jeweils in einem zugehörigen analogen Amplitudenmodulations-Datenstrom und Phasenmodulations-Datenstrom gewandelt werden. Auf diese Weise kann der analoge Phasenmodulations-Datenstrom zur Phasenmodulation der Sendeträgerfrequenz verwendet werden, während der polare Leistungsverstärker als Eingangssignal das phasenmodulierte Sendeträgerfrequenzsignal erhält. Auf diese Weise wird innerhalb von Polarkoordinaten die Winkelinformation bzw. Phaseninformation durch den Leistungsverstärker verstärkt. Der Verstärkungsfaktor ergibt sich wie bei dem oben erläuterten, bekannten Verfahren EER durch Einbeziehen des analogen Amplitudenmodulations-Datenstroms in die Festlegung einer Versorgungsspannung des polaren Leistungsverstärkers.

Im Hinblick auf das Auffinden von Datenbereichen in der Nähe des Ursprungs im In-Phase-/Quadratur-Diagramm ist es von Vorteil, wenn zu diesem Zweck ein Funktionsverlauf eines den digitalen Gesamtdatenstrom wiedergebenden Signals in der Zeit untersucht wird. Dabei wird davon ausgegangen, dass eine geringe Amplitude des digitalen Gesamtdatenstroms stellvertretend für eine Nähe eines zugehörigen Zeigers zum Ursprung im In-Phase-/Quadratur-Diagramm steht.

Die oben genannte Aufgabe wird hinsichtlich des Kommunikationsendgerätes gelöst durch die Merkmale des Patentanspruchs 8. Der Unteranspruch 9 enthält Hardware-Komponenten, die zur Ausführung der oben erläuterten Verfahrensschritte vorteilhafter Weise benutzt werden können.

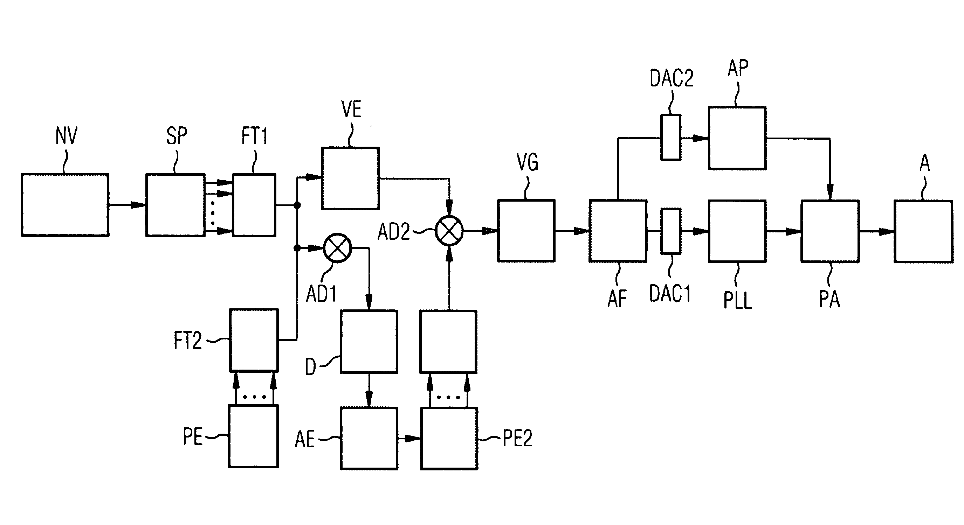

Ein Ausführungsbeispiel der Erfindung wird nachfolgend anhand der Zeichnung noch näher erläutert. Die einzige Figur zeigt ein Blockdiagramm einer Sendeendstufe eines Kommunikationsendgerätes.

Stellvertretend für sämtliche im Zusammenhang mit dieser Erfindung anwendbaren Mehrträgerverfahren wird nachfolgend eine Signalverarbeitung innerhalb einer Sendeendstufe eines Kommunikationsendgerätes, wie eines Mobiltelefons, einer Basisstation o. ä., für den Fall eines 54 Mbps-WLAN nach IEEE 802.11g beschrieben. Dieses Mehrträgerverfahren arbeitet nach dem OFDM-Prinzip, bei dem ein orthogonales Frequenzteilungsmultiplexen charakteristisch ist. Das genannte WLAN-System arbeitet mit insgesamt 52 Unterträgerfrequenzen, von denen 48 Unterträgerfrequenzen mit Nutzdaten moduliert sind, während vier Unterträgerfrequenzen Pilotsignalen zugeordnet ist.

In der Figur links zu Beginn der Signalverarbeitung ist eine Nutzdatencodiervorrichtung NV dargestellt, die im Basisband der Signalverarbeitung ein Codieren eines seriellen Nutzdatenstroms ausführt. Gleichzeitig ist die Nutzdatencodiervorrichtung NV ggf. noch für ein Verschachteln der Nutzdaten und ein Abbilden derselben auf Datensymbole eingesetzt, welche einen seriellen Nutzdatenstrom bilden. Der aus hintereinander angeordneten Symbolen zusammengesetzte serielle Nutzdatenstrom wird einer Wandlereinrichtung SP zugeführt, welche die einkommenden Symbole auf 48 Unterträgerfrequenzen verteilt. Die dabei entstehenden 48 parallelen digitalen Datenströme gelangen zu einer ersten Orthogonalisierungseinrichtung FT 1, an der die 48 mit Nutzdaten modulierten Unterträgerfrequenzen zueinander orthogonalisiert werden. Dies geschieht durch Ausführung einer inversen schnellen Fourier-Transformation (IFFT). Ein Ausgangssignal der Orthogonalisierungseinrichtung FT1 ist ein digitaler Gesamtnutzdatenstrom, der sowohl einer Verzögerungseinrichtung VE als auch einem ersten Addierer AD1 zugeführt wird.

Der Addierer AD1 erhält als weiteres Eingangssignal ein Ausgangssignal einer zweiten Orthogonalisierungseinrichtung FT2, welche zum Orthogonalisieren von vier Unterträgerfrequenzsignalen für Pilotsignale dient, die von einer ersten Piloteinführungseinrichtung PE1 bereitgestellt werden. Wenn es sich bei der Orthogonalisierungseinrichtung FT2 um eine 64 IFFT handelt, werden vier Unterträgerfrequenzsignale für Pilotsignale verarbeitet, während die verbleibenden auf Null gesetzt werden. Bei der Orthogonalisierungseinrichtung FT1 wird demgegenüber eine 64 IFFT von 48 Unterträgerfrequenzen für Nutzdaten realisiert, wobei bei den restlichen 16 Unterträgerfrequenzen ein sog. "Zero-Padding" angewandt wird, was ein Nullsetzen dieser Unterträgerfrequenzen bedeutet. Im Hinblick auf benötigte Rechenleistung bei der Orthogonalisierungseinrichtung FT2 ist zu berücksichtigen, dass Vorkenntnisse darüber bestehen, wie viele der insgesamt 64 Unterträgerfrequenzen auf Null gesetzt sind, welche Position und Phasenbeziehung zwischen den Pilotsignalen vorliegt. Diese Informationen können zum Auffinden eines besonders geeigneten, Rechenleistungeinsparenden Rechen-Algorithmus benutzt werden.

Der Addierer AD1 stellt somit ein Ausgangssignal bereit, welches als digitaler Gesamtdatenstrom bezeichnet wird und sich aus dem digitalen Gesamtnutzdatenstrom und dem digitalen Gesamtpilotdatenstrom zusammensetzt. Dieses Signal wird einem Detektor D zugeführt, dessen Aufgabe es ist, innerhalb des Gesamtdatenstroms Amplitudenbereiche aufzufinden, die sich nahe am Nullpunkt für die Signalamplitude befinden. Für solche Datenbereiche wird angenommen, dass sie innerhalb eines In-Phase-/Quadratur-Diagramms einem Zeiger zugeordnet sind, der sich in der Nähe des Ursprungs dieses Diagramms befindet. Solche Signale sind daher geeignet, das Spektrum eines Momentanfrequenzsignals als auch das Spektrum eines Amplitudensignals in unerwünschter Weise zu verbreitern, wobei selbst Phasensprünge hinsichtlich des Winkels als einer der Polarkoordinaten nach sich ziehen können.

Diese Problematik wird vermieden durch eine Amplitudenanpassungseinrichtung AE, der Informationen über die zeitliche Lage der kritischen Datenbereiche zugeführt werden. Die Amplitudenadaptionseinrichtung AE berechnet daraufhin für wenigstens ein Pilot-Unterträgerfrequenzsignal eine geänderte Amplitude, welche dazu führt, dass sich hinsichtlich des betreffenden Datenbereichs ein Abstand zur Amplitude Null vergrößert. Die in der Amplitudenanpassungseinrichtung AE berechneten neuen Amplituden für die Pilot-Unterträgerfrequenzsignale werden einer zweiten Piloteinführungseinrichtung PE2 zugeführt. Die zweite Piloteinführungseinrichtung PE2 generiert vier mit Pilotsignalen modulierte Unterträgerfrequenzsignale, die einer dritten Orthogonalisierungseinrichtung FT3 zugeleitet werden, die in ähnlicher Weise wie die beiden anderen Orthogonalisierungseinrichtungen FT1, FT2 zueinander orthogonalisierte Unterträgerfrequenzsignale erzeugt und einen digitalen adaptierten Gesamtpilotdatenstrom erzeugt.

An einem zweiten Addierer AD2 wird eine Summe aus dem digitalen adaptierten Gesamtpilotdatenstrom und einem digitalen Gesamtnutzdatenstrom gebildet, wobei der Gesamtnutzdatenstrom mit Hilfe der Verzögerungseinrichtung VE so verzögert worden ist, dass die Verzögerungszeit derjenigen Zeit entspricht, welche die oben erläuterten Komponenten zwischen dem ersten Addierer AD1 und dem zweiten Addierer AD2 für die Durchführung der ihr zugewiesenen Aufgaben benötigen. In dieser Weise wird der Gesamtnutzdatenstrom und der adaptierte Gesamtpilotdatenstrom zeitlich synchronisiert an dem Addierer AD2 zusammengesetzt.

Am Ausgang des zweiten Addierers AD2 liegt nun ein OFDM-Symbol vor, das an einer Verarbeitungseinrichtung VG mit einem Schutzintervall versehen wird, wie es im Rahmen von OFDM-Verfahren üblich ist. Bis zu einer bestimmten, durch das Schutzintervall festgelegten Zeitspanne sind Echos nicht störend für einen Empfang der OFDM-Signale. An der Verarbeitungseinrichtung VG kann das Symbol außerdem mit einem zyklischen Präfix versehen werden. Der zyklische Präfix wird für den 802.11 g/a-Standard vorgeschrieben. Er steht im Zusammenhang mit einer Maßnahme gegen Intersymbolinterferenzen in Funkkanälen mit Mehrwegeausbreitung. Es wird ein Schutzintervall vor einem Datenstrom eingefügt und dieser enthält eine periodische Verlängerung am Anfang.

Ein Ausgangssignal der Verarbeitungseinrichtung VG wird einer Aufspaltungseinrichtung AF zugeführt, welche die einkommenden Datensymbole, die als komplexes Signal vorliegen, in einen Amplitudenmodulations- und einen Phasenmodulationsanteil aufteilen. Ein Phasenmodulationssignal wird zunächst mit Hilfe eines Digital-Analogwandlers DAC1 in ein analoges Phasenmodulationssignal umgewandelt, das im Anschluss daran zur Phasenmodulation eines Sendefrequenzträgers der Sendeendstufe verwendet wird.

Auch der Amplitudenmodulationsanteil wird zunächst in einen analogen Amplitudenmodulations-Datenstrom umgewandelt, und zwar mit Hilfe des Digital-/Analogwandlers DAC2. in einer Amplitudensignal-Verarbeitungseinrichtung AP wird der Amplitudenmodulations-Datenstrom so aufbereitet, dass er zum Steuern einer Versorgungsspannung eines polaren Leistungsverstärkers PA verwendet werden kann. Dazu könnte beispielsweise eine DC-DC-Wandlung erforderlich sein.

Der polare Leistungsverstärker PA erhält sein amplitudenkonstantes Eingangssignal von einer Phasenmodulationseinrichtung PLL. Ein Ausgangssignal des polaren Leistungsverstärkers PA, d. h. ein OFDM-Sendesignal wird in bekannter Weise über eine Antennenanordnung A, die z. B. für MIMO mehrere Antennen umfassen kann, ausgesandt.

## Patentansprüche

1. Sendeverfahren für ein Mehrträgereignal,
bei dem
ein serieller digitaler Datenstrom in mehrere parallele digitale Datenströme umgewandelt wird, wobei jedem parallelen digitalen Datenstrom eine Unterträgerfrequenz zugeordnet wird;
die parallelen digitalen Datenströme orthogonalisiert und zu einem digitalen Gesamtdatenstrom zusammengefasst werden, der digitale Gesamtdatenstrom im Zuge einer Digital-/Analogwandlung in einen analogen Gesamtdatenstrom umgesetzt wird;
der analoge Gesamtdatenstrom auf eine Sendeträgerfrequenz gemischt, dann verstärkt und abschließend über eine Antennenanordnung ausgestrahlt wird;
wobei
der digitale Gesamtdatenstrom auf Datenbezeiche untersucht wird, die sich innerhalb eines vorgegebenen Abstande von einem Ursprungs in einem In-Phase/Quadratus-Diagramm befinden;
wenigstens eine Unterträgertrequenz in ihrer Amplitude derart verändert wird, dass der Abstand aufgfundener Datenbereiche von dem Ursprung zunimmt; und
einem Teil der orthogonalisierten digitalen parallelen Datenströme Unterträgerfrequenzen für Pilotsignale und die übrigen digitalen parallelen Datenströme unterträgertrequenzen für Nutzsignale zugeordnet werden, und
als die wenigstens eine, in ihrer Amplitude veränderte Unterträgerfrequenz eine Unterträgerfrequenz für Pilotsignale verwandet wird;
**dadurch gekennzeichnet,**
**dass** die digitalen parallelen Datenströme für Pilotsignale und die digitalen parallelen Datenströme für Nutzsignale jeweils gesondert orthogonalisiert worden, so dass ein digitaler Gesamtnutzdatenstrom und ein digitaler Gesamtpilotdatenstrom erzeugt werden, die zu dem digitalen Gesamtdatenstrom zusammengefasst werden.

2. Sendeverfahren nach Ansprüch 1,
**dadurch gekennzeichnet,**
**dass** nach Verändern der wenigstens einen Unterträgerfrequenz in ihrer Amplitude sämtlich digitalen parallelen Datenströme für Pilotsignale neu orthogonalisiert und zu einem adaptierten Gesamtpilotdatenstrom zusammengefasst werden.

3. Sendeverfahren nach Anspruch 2,
**dadurch gekennzeichnet,**
**dass** der adaptierte Gesamtpilotdatenstrom mit dem gesamten Nutzdatenstrom überlagert wird, wobei der gesamte Nutzdatenstrom derart verzögert wird, dass der Gesamtnutzdatenstrom und der adaptierte Gesamtpilotdatenstrom zeitlich synchronisiert werden.

4. Sendeverfahren nach einem der Ansprüche 1 bis 3,
**dadurch gekennzeichnet,**
**dass** der digitale Gesamtdatenstrom in einen Amplitudenmodulations-Datenstrom und einen Phasenmodulations-Datenstrom aufteilt, die jeweils in einen zugehörigen analogen Amplitudenmodulations-Datenstrom und Phasenmodulations-Datenstrom gewandelt werden, die einem polaren Leistungsverstärker zugeführt werden.

5. Sendeverfahren nach Anspruch 4,
**dadurch gekennzeichnet,**
**dass** der analoge Phasenmodulations-Datenetrom zur Phasenmodulation der Sendsträgerfrequenz verwendet wird und der polare Leistungsverstärker als Eingangssignal das phasenmodulierte Sendeträgerfrequenzsignal erhält.

6. Sendeverfahren nach einem der Ansprüche 4 oder 5,
**dadurch gekennzeichnet,**
**dass** der analoge Amplitudenmodulations-Datenstrom zum Steuern einer Versorgungespannung des polaren Leistungsverstärkers verwendet wird.

7. Sendeverfahren nach einem der Ansprüche 1 bis 6,
**dadurch gekennzeichnet,**
**dass** der digitale Gesamtdatenstrom derart auf Datenbereiche untersucht wird, die sich innerhalb eines vorgegebenen Abstandes von dem Ursprung befinden, dass ein Funktionsverlauf eines den digitalen Gesamtdatenstrom wiedergebendes signals in der Zeit untersucht wird.

8. Kommunikationsendgerät zur Unterstützung von Mehrträgersignalverfahren, mit
einer Nutzdatencodiereinrichtung (NV) zum Erzeugen eines seriellen digitalen Datenstroms;
einer Wandlereinrichtung (SP) zum Erzeugen mehrerer paralleler digitaler Datenströme aus dem seriellen digitalen Datenstrom unter Zuordnung einer jeweiligen Unterträgerfrequenz zu jedem parallelen digitalen Datenstrom, einer Orthogonalisierungseinrichtung (FT1) zum Orthogonalisieren der parallelen digitalen Datenströme und zum Ausgeben eines Gesamtdatenstroms;
einem Digital-/Analogwandler (DAC1, DAC2) zum Umsetzen des digitalen Gesamtdatenstroms in einen analogen Gesamtdatenstrom;
einer Modulationseinrichtung (AF) zum Modulieren des analogen Gesamtdatenstroms auf eine Sendsträgerfrequenz;
einem Leistungsverstärker (PA) zum verstärken das von der Kodulationseinrichtung (AF) generierten signals;
einer Antenne (A) zum Aussenden eines von dem Leistungsverstärker (PA) generierten Ausgangssignals;
einem Defektor (D) zum Untersuchen des digitalen Gesamtdatenstrome auf Datenbereiche, die sich innerhalb eines vorgegebenen Abstands von einem Ursprung in einem In-Phase/Quadratur-Diagramm befinden; und
eine Amplitudenanpassungseinrichtung (AE) rum Verändern wenigstens einer Unterträgerfrequenz in ihrer Amplitude derart, dass der Abstand aufgefundener Datenbereiche von dem Ursprung zunimmt; wobei
ein Teil der orthogonalisierten digitalen parallelen Datenströme Unterträgerfrequenzen für Pilotsignale und die übrigen digitalen parallelen Datenströme Unterträgerfrequenzen für Nutzsignale zugeordnet sind, und
die wenigstens eine, in ihrer Amplitude veränderte Unterträgerfrequenz eine Unterträgerfrequenz für Pilotsignale ist;
**dadurch gekennzeichnet,**
**dass** die Orthogonalisierungseinrichtung zweiteilig ausgebildet ist, wobei ein erster Teil (FT2) zum Orthogonalisieren der digitalen parallelen Datenströme für Pilotsignale und eine zweiter Teil (FT2) zum Orthogonalisieren der digitalen parallelen Datenströme für Nutzsignale dient, und sich der digitale Gesamtdatenstrom aus einen digitalen Gesamtnutzdatenstrom und einem digitalen Gesamtpilotendatenstrom zusammensetzt, die von einem Addierer (AD1) aufsummiert werden.

9. Kommunikationsendgerät nach Ansprüch 1,
**dadurch gekennzeichnet,**
**dass** eine Adaptions-Orthogonalisierungseinrichtung (FT3) zum Neuorthogonalisieren sämtlicher digitalen parallelen Datenströme für Pilotsignale und zum zusammenfassen dieser Datenströme zu einem adaptierten Gesamtpilotendatenstrom vorgesehen ist.

## Claims

1. Transmission method for a multi-carrier signal, wherein
a serial digital data stream is converted into multiple parallel digital data streams, wherein a sub-carrier frequency is assigned to each parallel digital data stream;
the parallel digital data streams are orthogonalized and combined into a digital overall data stream;
the digital overall data stream is converted into an analog overall data stream as part of a digital-analog conversion;
the analog overall data stream is mixed onto a transmit carrier frequency, then amplified and finally transmitted via an antenna array;
wherein
- the digital overall data stream is analyzed with respect to data ranges within a predetermined distance from an origin in an in-phase/quadrature diagram; and
- at least one sub-carrier frequency is modified with respect to its amplitude such that the distance of determined data ranges to the origin increases; and
- sub-carrier frequencies for pilot signals are assigned to a part of the orthogonalized digital parallel data streams and the remaining digital parallel data streams are assigned to sub-carrier frequencies for useful signals; and
- a sub-carrier frequency for pilot signals is used as the at least one sub-carrier frequency having its amplitude modified;
**characterized in that**
- the parallel digital data streams for pilot signals and the digital parallel data streams for useful signals are separately orthogonalized such that a digital overall useful data stream and a digital overall pilot data stream are generated, which are combined to form the overall digital data stream.

2. Transmission method according to claim 1,
**characterized in that**, having modified the at least one sub-carrier frequency in its amplitude, all digital parallel data streams for pilot signals are newly orthogonalized and combined into an adapted overall pilot data stream.

3. Transmission method according to claim 2,
**characterized in that**
the adapted overall pilot data stream is superimposed over the entire useful data stream, wherein the entire useful data stream is delayed such that the overall useful data stream and the adapted overall pilot data stream are synchronized in time.

4. Transmission method according to any of claims 1 to 3,
**characterized in that** the digital overall data stream is divided into an amplitude modulation data stream and a phase modulation data stream, each of which being converted into a corresponding analog amplitude modulation data stream and phase modulation data stream, which are provided to a polar power amplifier.

5. Transmission method according to claim 4,
**characterized in that** the analog phase modulation data stream is used for phase modulation of the transmission carrier frequency and the polar power amplifier receives the phase modulated transmission carrier frequency signal as input signal.

6. Transmission method according to claim 4 or 5,
**characterized in that** the analog amplitude modulation data stream is used to control a supply voltage of the polar power amplifier.

7. Transmission method according to any of claims 1 to 6,
**characterized in that** the digital overall data stream is analyzed with respect to data ranges located within a predetermined distance from the origin such that a function course of a digital signal representing the digital overall data stream is analyzed in time.

8. Communication device for support of multi-carrier signal methods, comprising
- a use data coding means (NV) for generating a serial digital data stream,
- a converter means (SP) for generating a plurality of parallel digital data streams from the serial digital data stream by associating a respective sub-carrier frequency to each parallel digital data stream,
- an orthogonalization means (FT1) for orthogonalizing the parallel digital data streams and for outputting an overall data stream;
- a digital-analog converter (DACI, DAC2) for converting the digital overall data stream into an analog overall data stream;
- a modulation means (AF) for modulating the analog overall data stream onto a transmit carrier frequency,
- a power amplifier (PA) for amplifying the signal generated by the modulation means (AF);
- an antenna (A) for transmitting an output signal generated by the amplifier (PA);
- a detector (D) for analyzing the digital overall data stream with respect to data ranges within a predetermined distance from an origin in a in-phase/quadrature diagram; and
- an amplitude adjustment means (AE) for modifying at least one sub-carrier frequency in its amplitude such that the distance of determined data ranges to the origin increases; wherein
- sub-carrier frequencies for pilot signals are assigned to a part of the orthogonalized digital parallel data streams and the remaining digital parallel data streams are assigned to sub-carrier frequencies for useful signals the at least one sub-carrier frequency having its amplitude modified is a sub-carrier frequency for pilot signals;
**characterized in that**
- the orthogonalization means has two parts, wherein a first part (FT2) serves to orthogonalize the digital parallel data streams for pilot signals and a second part (FT2) serves to orthogonalize the digital parallel data streams for useful signals, and wherein the digital overall data stream is formed by a digital overall useful data stream and pilot data stream, which are summed by an adder (AD 1).

9. Communication terminal according to claim 8
**characterized by** an adaptation orthogonalization means (FT3) for newly orthogonalizing all digital parallel data streams for pilot signals and for combining these data streams into an adapted overall pilot data stream.

## Revendications

1. Procédé d'émission d'un signal à porteuses multiples,
dans lequel
un flux de données numériques en série est converti en plusieurs flux de données numériques en parallèle, une fréquence de sous-porteuse étant affectée à chaque flux de données numériques en parallèle;
les flux de données numériques en parallèle sont orthogonalisés et sont réunis en un flux global de données numériques et le flux global de données numériques est converti, par une conversion numérique-analogique, en un flux global de données analogiques ;
le flux global de données analogiques est mélangé à une fréquence porteuse d'émission, puis amplifié et finalement émis par un ensemble d'antennes ;
le flux global de données numériques est examiné pour trouver des parties de données qui se trouvent à une distance prédéterminée par rapport à une origine dans un diagramme en phase / en quadrature ;
au moins une fréquence de sous-porteuse est modifiée dans son amplitude de manière à ce que la distance des parties de données trouvées augmente par rapport à l'origine ; et
des fréquences de sous-porteuses pour signaux pilotes sont affectées à une partie des flux de données numériques en parallèle orthogonalisés et des fréquences de sous-porteuses pour signaux utiles sont affectées aux flux de données numériques en parallèle restants; et
on utilise comme ladite au moins une fréquence de sous-porteuse modifiée dans son amplitude une fréquence de sous-porteuse pour signaux pilotes ;
**caractérisé en ce que** les flux de données numériques en parallèle pour signaux pilotes et les flux de données numériques en parallèle pour signaux utiles sont orthogonalisés séparément, pour produire un flux global de données numériques utiles et un flux global de données numériques pilotes qui sont réunis pour donner le flux global de données numériques.

2. Procédé d'émission selon la revendication 1, **caractérisé en ce que**, après la modification de l'amplitude de ladite au moins une fréquence de sous-porteuse, tous les flux de données numériques en parallèle pour les signaux pilotes sont à nouveau orthogonalisés et réunis en un flux global de données pilotes adaptées.

3. Procédé d'émission selon la revendication 2, **caractérisé en ce que** le flux global de données pilotes adaptées est superposé au flux global de données utiles, le flux global de données utiles étant retardé de manière à ce que le flux global de données utiles et le flux de données pilotes adaptées soient synchronisés dans le temps.

4. Procédé d'émission selon l'une des revendications 1 à 3, **caractérisé en ce que** le flux global de données numériques est subdivisé en un flux de données pour modulation en amplitude et un flux de données pour modulation en phase qui sont respectivement convertis en un flux analogique de données pour modulation en amplitude et un flux analogique de données pour modulation en phase, correspondants, qui sont envoyés à un amplificateur de puissance polaire.

5. Procédé d'émission selon la revendication 4, **caractérisé en ce que** le flux analogique de données pour modulation en phase est utilisé pour la modulation en phase de la fréquence porteuse d'émission et **en ce que** l'amplificateur de puissance polaire reçoit comme signal d'entrée le signal de fréquence porteuse d'émission modulé en phase.

6. Procédé d'émission selon l'une des revendications 4 ou 5, **caractérisé en ce que** le flux analogique de données pour modulation d'amplitude est utilisé pour commander une tension d'alimentation de l'amplificateur de puissance polaire.

7. Procédé d'émission selon l'une des revendications 1 à 6, **caractérisé en ce que** le flux global de données numériques est examiné pour trouver des parties de données qui se trouvent situées à moins d'une distance prédéterminée par rapport à l'origine, et qu'on étudie dans le temps une allure d'un signal reproduisant le flux global de données numériques.

8. Terminal de communication destiné à supporter un procédé de signal à porteuses multiples, comportant :
un dispositif de codage de données utiles (NV), destiné à produire un flux de données numériques en série ;
un dispositif convertisseur (SP), destiné à produire plusieurs flux de données numériques en parallèle à partir du flux de données numérique en série, avec attribution d'une fréquence de sous-porteuse respective à chacun des flux de données numériques en parallèle,
un dispositif d'orthogonalisation (FT1), destiné à orthogonaliser les flux de données numériques en parallèle et à produire en sortie un flux global de données ;
un convertisseur numérique-analogique (DAC1, DAC2), destiné à convertir le flux global de données numériques en un flux global de données analogiques ;
un dispositif de modulation (AF), destiné à moduler le flux global de données analogiques sur une fréquence porteuse d'émission ;
un amplificateur de puissance (FA), destiné à amplifier le signal produit par le dispositif de modulation (AF) ;
une antenne (A), destinée à émettre un signal de sortie produit par l'amplificateur de puissance (FA) ;
un détecteur (D) destiné à examiner le flux global de données numériques pour y trouver des parties de données qui se trouvent à une distance prédéterminée par rapport à une origine dans un diagramme en phase / en quadrature ; et
un dispositif de modification d'amplitude (AE), destiné à modifier l'amplitude d'au moins une fréquence de sous-porteuse afin d'augmenter la distance des parties de données trouvées par rapport à l'origine ; dans lequel
une partie des flux de données numériques en parallèle orthogonalisées est affectée à des fréquences de sous-porteuses pour signaux pilotes et les flux de données numériques en parallèle restants sont affectés à des fréquences de sous-porteuses pour signaux utiles ; et
ladite au moins une fréquence de sous-porteuse modifiée dans son amplitude est une fréquence de sous-porteuse pour signaux pilotes ;
**caractérisé en ce que**
le dispositif d'orthogonalisation est configuré en deux parties, une première partie (FT2) étant utilisée pour orthogonaliser les flux de données numériques en parallèle pour signaux pilotes et une deuxième partie (FT2) pour orthogonaliser les flux de données numériques parallèles pour signaux utiles, et **en ce que** le flux global de données numériques se compose d'un flux global de données numériques utiles et d'un flux global de données numériques pilotes qui sont sommés par un sommateur (AD1).

9. Terminal de communication selon la revendication 8,
**caractérisé en ce**
**qu'**il est prévu un dispositif d'adaptation-orthogonalisation (FT3) pour orthogonaliser à nouveau tous les flux de données numériques en parallèle pour signaux pilotes et pour réunir ces flux de données afin de donner un flux global de données pilotes adaptées.
